Europäisches Patentamt

**European Patent Office**

Office européen des brevets

(19)

(11) Veröffentlichungsnummer: **0 008 066**
**B1**

(12) **EUROPÄISCHE PATENTSCHRIFT**

(45) Veröffentlichungstag der Patentschrift:
20.07.83

(51) Int. Cl.³: **H 04 Q 11/04, H 04 Q 3/54**

(21) Anmeldenummer: **79102729.5**

(22) Anmeldetag: **31.07.79**

(54) **Indirekt gesteuerte, mit Zeitkanalkopplern ausgerüstete Fernmeldevermittlungsanlage, insbesondere Fernsprechvermittlungsanlage.**

(30) Priorität: **09.08.78 DE 2834918**

(43) Veröffentlichungstag der Anmeldung:
**20.02.80 Patentblatt 80/4**

(45) Bekanntmachung des Hinweises auf die Patenterteilung:
**20.07.83 Patentblatt 83/29**

(84) Benannte Vertragsstaaten:
**AT CH DE FR GB IT NL SE**

(56) Entgegenhaltungen:
| | |
|---|---|
| AU-A-483 482 | FR-A-2 298 915 |
| DE-A-2 517 525 | FR-A-2 335 896 |
| DE-A-2 526 115 | LU-A-67.356 |
| DE-A-2 740 713 | US-A-4 127 742 |
| DE-A-2 748 580 | |

MICROCOMPUTER ARCHITECTURES, Third Euromiro Symposium on Microprocessing and Microprogramming, Oktober 3–6, 1977, Amsterdam (NL) BROFFERIO et al. «Electronic telephone switching system: A distributed control approach», Seiten 138–142.

INTERNATIONAL SWITCHING SYMPOSIUM, Oktober 25–29, 1976, Kyoto (JP) SKAPERDA «Goneric digital switching system», Seiten 223–4–1 bis 223–4–8.

(73) Patentinhaber: **SIEMENS AKTIENGESELLSCHAFT,
Berlin und München Wittelsbacherplatz 2,
D-8000 München 2 (DE)**

(72) Erfinder: **Müller, Helmut, Dipl.-Ing., Meisenweg 3,
D-8033 Planegg (DE)**
Erfinder: **von Ow, Hans Peter, Dr., Starnberger
Strasse 11, D-8000 München 71 (DE)**
Erfinder: **Paulmichl, Erich, Dipl.-Ing., Am Würmufer 9,
D-8035 Gauting (DE)**
Erfinder: **Rambold, Thomas, Dipl.-Ing.,
Guardinistrasse 139, D-8000 München 70 (DE)**
Erfinder: **Werres, Bernhard, Dipl.-Ing.,
Benediktenwand 23, D-8000 München 90 (DE)**

EUROCON '77 – Conference Proceedings on Communications, Mai 3–7, 1977, Venezia (IT) LORENZINI et al. «Dedicated microcomputer as signalling preprocessor in Proteo Tandem Exchange». Seiten 3.5.3.1 bis 3.5.3.6.

1978 INTERNATIONAL ZÜRICH SEMINAR ON DIGITAL COMMUNICATIONS, 7–9 März 1978, Zürich (CH) BARTH et al. «A digital PABX system with improved flexibility», Seiten B5.1 bis B5.6.

TELCOM REPORT, Band 2, Heft 3, März 1979, Berlin (DE) SUCKFULL «Architektur einer neuen Linie digitaler öffentlicher Fernsprechvermittlungen», Seiten 174 bis 183.

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Indirekt gesteuerte, mit Zeitkanalkopplern ausgerüstete Fernmeldevermittlungsanlage, insbesondere Fernsprechvermittlungsanlage

Bekanntlich sind in Vermittlungsanlagen von Steuerwerken anstehende Informationen zu verschiedenen anderen Einrichtungen zu verteilen (siehe P. Gerke: «Rechnergesteuerte Vermittlungsanlagen» 1972, Seiten 198, 212, 213). Die Informationen werden u.a. zu Teilnehmerschaltungen, Wahlsätzen und Verbindungssätzen, aber auch zum Koppelfeld und zu anderen Steuerwerken verteilt. Dabei sind die Informationen in eine geeignete Folge zu bringen, z.B. eine Folge binärer elektrischer Impulse (siehe DE-PS 1 261 160). Ausserdem ist es bekannt, weiterzugebende Informationen zunächst in einem Zwischenspeicher mit mehreren Speicherplätzen zu sammeln, wobei jeweils einer dieser Speicherplätze vorübergehend derselben Informationsquelle zugeteilt wird (siehe DE-PS 1 190 517). Diese Technik ist auch für Fernsprechvermittlungsanlagen angegeben worden, welche mit Zeitkanalkopplern ausgerüstet ist. Die Informationen können zeitlich gestaffelt verteilt werden, wobei periodisch und zyklisch aufeinanderfolgende Verteilungszeitpunkte vorgesehen sind, die jeweils auch gleiche Zeitabstände haben können. Die Informationen werden dabei aus den Speicherplätzen eines Speichers geliefert, wobei auch die Adressen von Informationsempfängern verwendet werden (siehe DE-PS 1 199 330).

Die Erfindung betrifft eine indirekt gesteuerte, mit Zeitkanalkopplern ausgerüstete Fernmeldevermittlungsanlage, insbesondere Fernsprechvermittlungsanlage, mit einem Steuerwerk, das Informationen, die von einem Arbeitsspeicher geliefert werden und für eine Abgabe an mehrere verschiedene Schalteinrichtungen bestimmt sind und die von der Lieferung bis zur Abgabe durch Adressen ergänzt sind, über den Schalteinrichtungen entsprechende Zeitlagen-Zeichenkanäle zu jenen in Zeitabständen überträgt, die unter anderem durch die Zeitlagen der Zeichenkanäle bestimmt sind. Die DE-PS 2 540 339 beschreibt eine Fernsprechvermittlungsanlage dieser Art und befasst sich mit dem Problem der Verteilung von Informationen, die von einem zentralen Steuerwerk erarbeitet werden und die für dezentrale Schalteinrichtungen bestimmt sind. Hierin sind eine Mehrzahl von als Zwischenspeicher dienenden Ausgabelisten vorgesehen, von denen je eine einer dezentralen Schalteinrichtung zugeordnet ist. Die vorliegende Erfindung befasst sich mit dem Problem, den Arbeitsrhythmus des Systems zur Übertragung der Informationen unabhängig zu machen von dem Arbeitsrhythmus des die Informationen liefernden Arbeitsspeichers. Die Bedingungen, nach denen die Schalteinrichtungen die Informationen aufnehmen, sollen also möglichst unabhängig sein von den Bedingungen, unter denen die Informationen abgegeben werden sollen.

Die Erfindung löst die Aufgabe dadurch, dass ein den Betriebsablauf des Steuerwerks steuerndes Leitwerk die Informationen durch Ansteuerung von Speicherplätzen des Arbeitsspeichers mittels Arbeitsspeicherplatzadressen von diesem Arbeitsspeicher abruft und diese Informationen zusammen mit den Arbeitsspeicherplatzadressen an einen FiFo-Speicher weiterleitet, dass die Informationen von dem FiFo-Speicher unverändert aufgenommen werden, während die beigefügten Arbeitsspeicherplatzadressen zunächst einem Umsetzer zugeführt werden, der diese in Schalteinrichtungsadressen umsetzt, die in Einzelzuordnung zu den jeweils entsprechenden Informationen ebenfalls im FiFo-Speicher gespeichert werden, die zugleich die Speicherplätze eines Pufferspeichers angeben und die zur Ansteuerung von Speicherplätzen dieses Pufferspeichers dienen, dass der Pufferspeicher, der regelmässig zyklisch betrieben wird, die Informationen mit den Schalteinrichtungsadressen sukzessive vom FiFo-Speicher abholt und sie anhand der dabei erhaltenen Schalteinrichtungsadressen an seinen Pufferspeicherplätzen speichert, und dass die Informationen entsprechend der zyklischen Betriebsweise des Pufferspeichers zyklisch an die Schalteinrichtungen, für die sie aufgrund ihrer Schalteinrichtungsadressen bestimmt sind, ausgegeben werden, und dass entsprechend der Ansteuerung der Pufferspeicherplätze mittels der Schalteinrichtungsadressen die Pufferspeicherplätze den Schalteinrichtungen individuell zugeordnet sind.

Durch die angegebene Zwischenspeicherung der weiterzugebenden Informationen im FiFo-Speicher und im Pufferspeicher wird zustandegebracht, dass der Arbeitsrhythmus des Steuerwerks unabhängig vom zyklischen Weitergeben der Informationen abwickelbar ist, wodurch in jedem Fall ein hinreichend schneller Verteilungszyklus zustandegebracht werden kann. Es lässt sich dann vorteilhafterweise auch ohne Beeinträchtigung des Arbeitsrhythmus erreichen, dass dieselben Informationen zur Erhöhung der Übertragungssicherheit gegebenenfalls mehrfach wiederholt an die Einrichtungen weitergegeben werden, für die sie bestimmt sind. Ferner sind vorteilhafterweise die im Zuge der Weitergabe benutzten Adressen von Speicherzellen unabhängig von den für den Arbeitsspeicher des Steuerwerks zu benutzenden Adressen. Dies erleichtert die Ausnutzung des Arbeitsspeichers für weitere innerhalb des Steuerwerks auftretende Informationen.

Bei dem Steuerwerk kann es sich um ein zur Vermittlungsanlage gehörendes dezentrales oder um ein zentrales Steuerwerk handeln. Das Steuerwerk kann auch über einen Zeitkanal, der über einen Zeitkanalkoppler führt, mit einem anderen Steuerwerk verbunden sein, über den der Informationsaustausch zwischen diesen Steuerwerken zu führen ist.

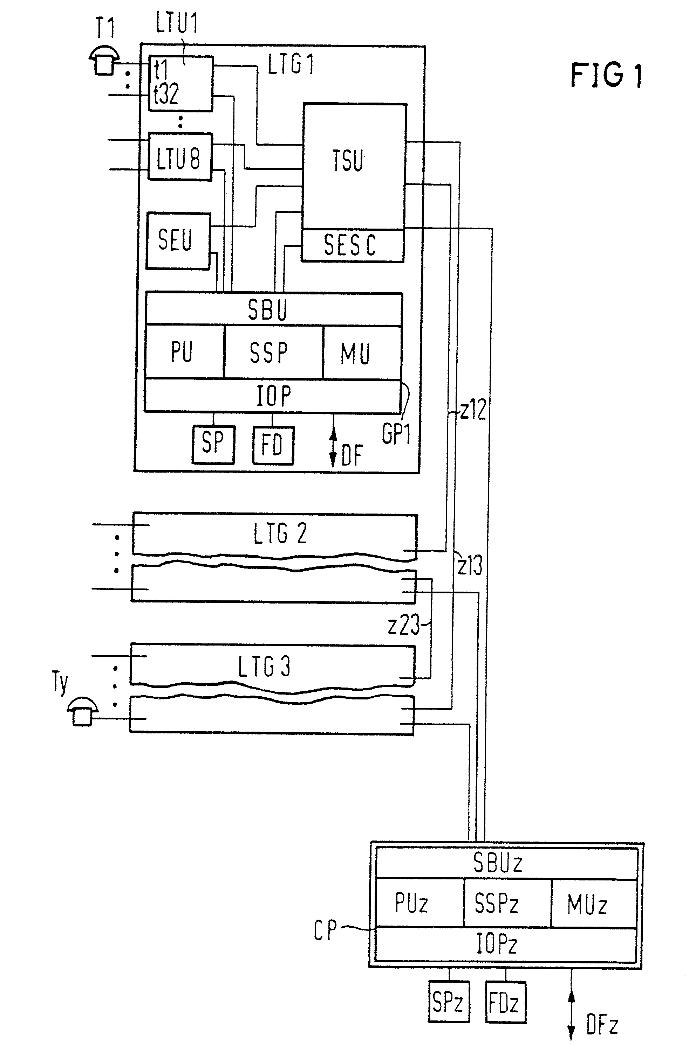

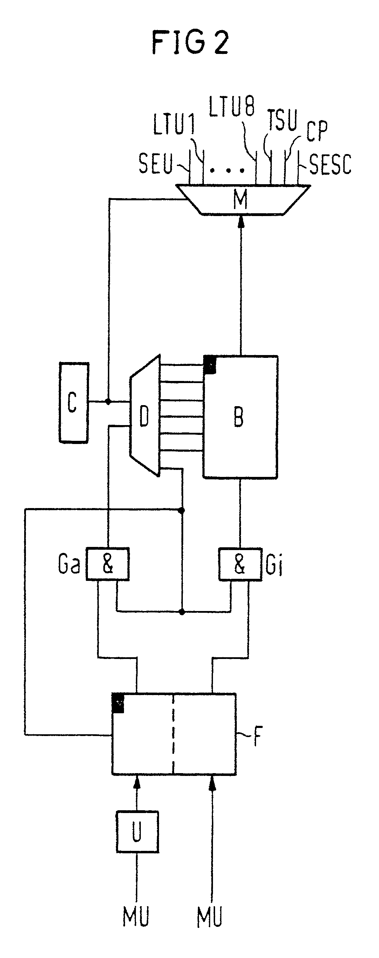

Beispiele für die erfindungsgemässen Massnahmen bei einer Vermittlungsanlage und für die Arbeitsweise der betroffenen Teileinrichtungen werden im folgenden anhand der Figuren näher erläutert. Fig. 1 zeigt die Gliederung einer in Frage kommenden Fernsprechvermittlungsanlage mit Zeitkanalkopplern. Fig. 2 zeigt eine Schaltungsanordnung mit den zur Zwischenspeicherung erforderlichen Speichern und mit Einrichtungen zur Verteilung und Weitergabe von zwischengespeicherten Informationen.

Zu der in Fig. 1 gezeigten Vermittlungsanlage gehören die Anlageteile LTG1, LTG2 und LTG3, an die einerseits die Teilnehmerstellen T1...Ty und anderseits über Steuerleitungen das zentrale Steuerwerk CP angeschlossen sind. Die verschiedenen Anlageteile sind noch untereinander über die Zwischenleitungen z12, z13 und z23 verbunden. Jeder Anlageteil hat ein eigenes dezentrales Steuerwerk. So hat der Anlageteil LTG1 das dezentrale Steuerwerk GP1. Zu diesem Anlagenteil gehört ferner der Zeitkanalkoppler TSU, der mit der Kopplersteuerung SESC ausgerüstet ist. Die Kopplersteuerung SESC bekommt Einstellbefehle vom dezentralen Steuerwerk GP1. Die Teilnehmerstelle T1 ist bei dem Anlagenteil LTG1 über die Teilnehmeranschlussschaltung t1 und über weitere Schaltungen an den Zeitkanalkoppler TSU angeschlossen. Die Teilnehmeranschlussschaltungen sind hier zu Mehrfachanschlussschaltungen gruppenweise zusammengefasst. So sind die Teilnehmeranschlussschaltungen t1...t32 zur Mehrfachanschlussschaltung LZ...U1 agezusammengefasst. Es sind bei dem Anlageteil LTG1 mehrere Mehrfachanschlussschaltungen vorgesehen, zu denen auch noch die Mehrfachanschlussschaltung LTU8 gehört. Es können auch entsprechende Mehrfachanschlussschaltungen vorgesehen sein, bei denen mehrere Verbindungsleitungsanschlussschaltungen zusammengefasst sind, an die Verbindungsleitungen angeschlossen sind, die beispielsweise zu anderen Vermittlungsanlagen führen. An den Zeitkanalkoppler TSU ist ferner die Signalschaltung SEU angeschlossen, in der Tongenerator, Rufgenerator, Codesender und -empfänger zusammengefasst sind. Diese Signalschaltung kann demgemäss die verschiedenen Hörtöne sowie Rufzeichen und sonstige benötigten Codezeichen liefern. Ausserdem kann sie solche Zeichen auch für ihre Auswertung empfangen. Die Teilnehmeranschlussschaltungen t1...t32 und die weiteren sowie die Signalschaltung SEU sind an das Steuerwerk GP1 und an den Zeitkanalkoppler TSU angeschlossen. Diese Einrichtungen können daher über den Zeitkanalkoppler TSU fallweise miteinander verbunden werden.

Ausserdem können diese Einrichtungen auch Steuerinformationen mit dem Steuerwerk GP1 austauschen, und zwar über den zugehörigen Informationspuffer SBU, mit dessen Hilfe ein störender Zeitzwang dabei vermieden wird. Zu diesem Steuerwerk gehören noch das Leitwerk SSP, das Verarbeitungswerk PU, der Arbeitsspeicher MU und die Ein-Ausgabesteuerung IOP, an die noch der Hintergrundspeicher FD und das Bediengerät SP angeschlossen sind. Dort ist noch der Datenfernübertragungsanschluss DF vorgesehen, über den gegebenenfalls mit anderen Vermittlungen Steuerdaten ausgetauscht werden können. Die in der Fig. 1 gezeigten Anlagenteile LTG1, LTG2 und LTG3 sind in allen Kombinationen über die Zwischenleitung z12, z13 und z23 verbunden, über die Zeitkanäle geführt sind. Ausserdem sind die zugehörigen dezentralen Steuerwerke, wie das Steuerwerk GP1, mit dem entsprechend aufgebauten zentralen Steuerwerk CP verbunden.

Dieses zentrale Steuerwerk wirkt beim Aufbau und Abbau von Verbindungswegen mit, die über mindestens zwei der Anlagenteile LTG1, LTG2 und LTG3 führen. Dabei veranlasst das zentrale Steuerwerk CP ausserdem, dass die anderen Steuerwerke für den Aufbau und Abbau von Verbindungswegen sinngemäss in Anspruch genommen werden, wozu zwischen diesen Steuerwerken Steuerinformationen ausgetauscht werden. Zum zentralen Steuerwerk CP gehören der Informationspuffer SBUz, das Leitwerk SSPz, das Verarbeitungswerk PUz, der Speicher MUz und die Ein-Ausgabesteuerung IOPz, an die der Hintergrundspeicher FDz und das Bedienungsgerät SPz angeschlossen sind. Ausserdem ist dort noch der Datenfernübertragungsanschluss DFz vorgesehen. Die dezentralen Steuerwerke, wie das Steuerwerk GP1, wickeln in jedem Fall solche Vermittlungsfunktionen ab, die für jede Verbindungsanforderung anfallen und die unter Zeitzwang stehen. Dazu gehören das Abfragen von Teilnehmerschaltungen, die Verarbeitung von Vermittlungsinformationen, die insbesondere von Teilnehmerschaltungen oder über Verbindungsleitungen geliefert werden, die Gebührenerfassung, wobei z.B. Gebührenimpulse gezählt werden, und die Lieferung von Einstellbefehlen für die Kopplersteuerung. Das zentrale Steuerwerk CP wickelt dagegen Vermittlungsfunktionen ab, die den Zusammenhang der Teileinrichtungen der Anlage und deren Zusammenhang mit anderen Anlagen berücksichtigen müssen. Dazu gehören die Bewertung von gewählten Ziffern von Rufnummern, die Suche von zu benutzenden Koppelfeldausgängen, die Suche und Auswahl von Verbindungswegen, die über mehrere Zeitkanalkoppler führen, und die Leitweglenkung.

In der Fig. 2 sind die Schaltungsteile des Informationspuffers SBU gezeigt, über die Informationen zu den Schalteinrichtungen LTU1...LTU8, SEU, SESC, TSU und CP weitergegeben werden. Diese Informationen können über einzelne Leitungen, welche Zeitkanäle aufweisen, können aber auch über Sammelleitungen mit jeweils mehreren Zeitkanälen weitergegeben werden. Geliefert werden die Informationen mit Hilfe des den Betriebsablauf des Steuerwerks GP1 steuernden Leitwerks SSP. Dieses Steuerwerk holt die weiterzugebenden Informationen entsprechend seinem Arbeitsrhythmus von Speicherplätzen des Arbeitsspeichers MU ab und schickt die Informationen nacheinander zum FiFo-Speicher F, wo sie unverändert aufgenommen werden. Ausserdem werden auch die Adressen der Speicherplätze, in denen sich diese Informationen im Arbeitsspeicher MU befanden, mit Hilfe des Leitwerks SSP geliefert. Diese Adressen werden durch den Umsetzer U in die anderen Adressen umgesetzt, die die Speicherplätze des Pufferspeichers B angeben, in die sie später eingespeichert werden. Zunächst werden sie jedoch jeweils gemeinsam mit der zugehörigen Information von einem Speicherplatz des FiFo-Speichers F aufgenommen. Der FiFo-Speicher F ist als Schieberegister ausgebildet, das die Informationen byteweise von seinem Eingang, an den der Umsetzer U und der Arbeitsspeicher MU angeschlossen sind, zum Ausgang schiebt, über den zum Pufferspeicher B die Informationen zum Einspeichern und die Adressen zum Ansteuern von Speicherplätzen weitergegeben werden. Es wird also vom Arbeitsspeicher MU jeweils eine Information abgeholt, die ein Byte mit mehreren Bits umfasst.

Die Informationen werden zum Pufferspeicher B über das UND-Glied Gi weitergegeben. Die Adressen werden über das UND-Glied Ga weitergegeben und gelangen zunächst zum Dekoder D, unter dessen Mitwirkung sie zum Ansteuern von Speicherplätzen des Pufferspeichers B ausgenutzt werden. Mit Hilfe dieser Adressen werden die Speicherplätze des Pufferspeichers auch den Einrichtungen, an welche die Informationen weiterzugeben sind, individuell zugeordnet. Der Pufferspeicher B wird nämlich regelmässig zyklisch betrieben und damit werden die in seinen Speicherplätzen enthaltenen Informationen in diesem Zyklus ausgegeben und dabei zyklisch an die Einrichtungen, für die sie bestimmt sind, verteilt.

Das Weitergeben der im Pufferspeicher B enthaltenen Informationen und auch das vorherige Abholen dieser Informationen vom FiFo-Speicher F wird mit Hilfe des Adressenzählers C und des Decoders D zustande gebracht. Dieser Adressenzähler ist mit dem Decoder D verbunden, der mit Hilfe der vom Adressenzähler C gelieferten Adressen die Speicherplätze des Pufferspeichers B zum Ablesen von Informationen zyklisch ansteuert. Der Decoder D hat nun noch einen Ausgang, über den mit Hilfe einer zusätzlichen Adresse, die vom Adressenzähler C geliefert wird und in den Zyklus der sonstigen Adressen eingefügt ist, eine Steuerinformation zum FiFo-Speicher F geschickt wird, die ausserdem auch zu Eingängen der UND-Glieder Ga und Gi gelangt. Dabei wird die am Ausgang des FiFo-Speichers F anstehende Information von dort abgeholt und zum Pufferspeicher B geschickt. Ausserdem wird auch zugleich jeweils die zugehörige im FiFo-Speicher F am Ausgang anstehende Adresse zum Decoder D geschickt, der auch mit dem UND-Glied Ga verbunden ist. Sie wird dort dekodiert und bewirkt, dass die zugleich gelieferte Information in den durch diese Adresse bestimmten Speicherplatz des Pufferspeichers B eingespeichert wird. Die zum FiFo-Speicher F geschickte Steuerinformation wirkt bei diesen Vorgängen mit, indem sie jeweils die Weitergabe einer gespeicherten Information über den Ausgang dieses Speichers bewirkt. Ausserdem bewirkt sie dann noch, dass die nächste auszugebende Information dort zum Ausgang hin weiter verschoben wird.

Durch eine Taktsteuerung kann beispielsweise in an sich bekannter Weise zustandegebracht werden, dass das Eingeben von Informationen, das Abholen von Informationen und das Verschieben von Informationen innerhalb des FiFo-Speichers F abgewickelt wird, ohne dass dabei gegenseitige Störungen auftreten. Die Anzahl der Speicherplätze kann unter Berücksichtigung der Sequenz von Eingabevorgängen und Abholvorgängen bemessen werden und daher auch kleiner als die Anzahl der Speicherplätze des Pufferspeichers B sein, nämlich dann, wenn die Eingabevorgänge hinreichend seltener als die Abholvorgänge sind. Die Eingabevorgänge sind abhängig vom Arbeitsrhythmus des Leitwerks, während die Abholvorgänge abhängig von der Zykluszeit sind, die für den Arbeitsspeicher B und damit für die Verteilung von Informationen vorgesehen ist. Durch geeignete Wahl dieser Sequenzen erzielt man, dass die über die Zeichenkanäle geschickten Informationen zur Erhöhung der Übertragungssicherheit jeweils mehrfach wiederholt werden.

Die UND-Glieder Ga und Gi sind derart ausgebildet, dass sie jeweils eine ein Byte umfassende Information weitergeben können. Die vom UND-Glied Gi gegebenenfalls weitergegebene Information ersetzt im Pufferspeicher B die im gleichzeitig dabei angesteuerten zugehörigen Speicherplatz vorher enthaltene Information. Die im Pufferspeicher B enthaltenen Informationen werden dann aufgrund seines Betriebes byteweise parallel zu dem an seinem Ausgang angeschlossenen Multiplexer M weitergegeben, der sie byteweise seriell über die Zeichenkanäle weiterschickt. Es handelt sich hierbei um die Zeichenkanäle, die zu den Einrichtungen SEU, LTU1...LTU8, TSU, SESC und CP führen. Dies ist in der Fig. 2 durch mit dementsprechenden Hinweiszeichen versehene Linien angegeben, die vom Multiplexer M abgehen. Der Multiplexer M ist auch mit dem Adressenzähler C verbunden. Über diese Verbindung wird er vom Adressenzähler C zum zeitgerechten Weiterschicken der Informationen über die Zeichenkanäle veranlasst. Der Multiplexer setzt hierbei Informationen, die auf dem vom Pufferspeicher B zu ihm hinführenden Kanal ankommen, auf eine grössere Anzahl von Kanälen um. Dadurch wirkt er bei dem zyklischen Verteilen dieser Informationen an eine grössere Anzahl von Einrichtungen mit.

Die vom Steuerwerk GP1 gelieferten Informationen gelangen mit Hilfe der erfindungsgemässen Massnahmen zu den Anschlussschaltungen des Anlagenteils LTG1, ferner zum zugehörigen Zeitkanalkoppler TSU und zur zugehörigen Kopplersteuerung SESC und auch zur Signalschaltung SEU. Ferner werden auch die vom zentralen Steuerwerk CP benötigten Informationen verteilt. Alle diese Informationen können also in vorteilhafter Weise mit Hilfe derselben Schaltungsteile verteilt werden. In entsprechender Weise können auch von den Steuerwerken der anderen Anlagenteile LTG2 und LTG3 Informationen verteilt werden. Informationen, die über die Informationspuffer bei den Steuerwerken all diese Anlagenteile eintreffen, können dort über hier nichtgezeigte Schaltungsteile dieser Informationspuffer aufgenommen werden. Auch für den Informationspuffer SBUz des zentralen Steuerwerks CP kann die beschriebene Technik angewendet werden. Das zentrale Steuerwerk CP ist über Zeichenkanäle mit den dezentralen Steuerwerken GP1... verbunden. Diese Zeichenkanäle sind hier jeweils über einen vom betreffenden dezentralen Steuerwerk gesteuerten Zeitkanalkoppler geführt. So ist der Zeichenkanal zwischen dem zentralen Steuerwerk CP und dem dezentralen Steuerwerk GP1 über den Zeitkanalkoppler TSU geführt.

**Patentansprüche**

1. Indirekt gesteuerte, mit Zeitkanalkopplern (TSU) ausgerüstete Fernmeldevermittlungsanlage, insbesondere Fernsprechvermittlungsanlage, mit einem Steuerwerk (GP1), das Informationen, die von einem Arbeitsspeicher (MU) geliefert werden und für eine Abgabe an mehrere verschiedene Schalteinrichtungen (SEU, LTU1...LTU8, TSU, CP, SESC) bestimmt sind und die von der Lieferung bis zur Abgabe durch Adressen ergänzt sind, über den Schalteinrichtungen (SEU, LTU1...LTU8, TSU, CP, SESC) entsprechende Zeitlagen-Zeichenkanäle zu jenen in Zeitabständen überträgt, die unter anderem durch die Zeitlagen der Zeichenkanäle bestimmt sind, dadurch gekennzeichnet, dass ein den Betriebsablauf des Steuerwerks (GP1) steuerndes Leitwerk (SSP) die Informationen durch Ansteuerung von Speicherplätzen des Arbeitsspeichers (MU) mittels Arbeitsspeicherplatzadressen von diesem Arbeitsspeicher (MU) abruft und diese Informationen zusammen mit den Arbeitsspeicherplatzadressen an einen FiFo-Speicher (F) weiterleitet, dass die Informationen von dem FiFo-Speicher (F) unverändert aufgenommen werden, während die beigefügten Arbeitsspeicherplatzadressen zunächst einem Umsetzer (U) zugeführt werden, der diese in Schalteinrichtungsadressen umsetzt, die in Einzelzuordnung zu den jeweils entsprechenden Informationen ebenfalls im FiFo-Speicher (F) gespeichert werden, die zugleich die Speicherplätze eines Pufferspeichers (B) angeben und die zur Ansteuerung von Speicherplätzen dieses Pufferspeichers (B) dienen, dass der Pufferspeicher (B), der regelmässig zyklisch betrieben wird, die Informationen mit den Schalteinrichtungsadressen sukzessive vom FiFo-Speicher (F) abholt und sie anhand der dabei erhaltenen Schalteinrichtungsadressen an seinen Pufferspeicherplätzen speichert, und dass die Informationen entsprechend der zyklischen Betriebsweise des Pufferspeichers (B) zyklisch an die Schalteinrichtungen (SEU, LTU1...LTU8, TSU, CP, SESC), für die sie aufgrund ihrer Schalteinrichtungsadressen bestimmt sind, ausgegeben werden, und dass entsprechend der Ansteuerung der Pufferspeicherplätze mittels der Schalteinrichtungsadressen die Pufferspeicherplätze den Schalteinrichtungen (SEU, LTU1...LTU8, TSU, CP, SESC) individuell zugeordnet sind.

2. Fernmeldevermittlungsanlage nach Anspruch 1, dadurch gekennzeichnet, dass für die zyklische Ausgabe der Informationen vom Pufferspeicher (B) an die Schalteinrichtungen (SEU, LTU1...LTU8, TSU, CP, SESC) zwischen diese Schalteinrichtungen und den Pufferspeicher (B) ein Multiplexer (M) zwischengeschaltet ist, der die Informationen auf zu den Schalteinrichtungen (SEU, LTU1...LTU8, TSU, CP, SESC) führende verschiedene Zeitlagen-Zeichenkanäle verteilt.

3. Fernmeldevermittlungsanlage nach Anspruch 1, dadurch gekennzeichnet, dass der FiFo-Speicher (F) als Schieberegister ausgebildet ist, das die Informationen byteweise vom Eingang, an den der Umsetzer (U) und der Arbeitsspeicher (MU) angeschlossen sind, zum Ausgang schiebt, über den zum Pufferspeicher (B) die Informationen zum Einspeichern und die Pufferspeicherplatzadressen zum Ansteuern von Pufferspeicherplätzen weitergegeben werden.

4. Fernmeldevermittlungsanlage nach Anspruch 2, dadurch gekennzeichnet, dass vom Pufferspeicher (B) die Informationen byteweise parallel zum Multiplexer (M) weitergegeben werden, der sie byteweise seriell über die Zeitlagen-Zeichenkanäle weiterschickt.

5. Fernmeldevermittlungsanlage nach einem der Ansprüche 2 bis 4, dadurch gekennzeichnet, dass ein Adressenzähler (C) vorgesehen ist, der mit dem Pufferspeicher (B) über einen Decoder (D) und mit dem Multiplexer (M) verbunden ist und der die Speicherplätze zum Ablesen von Informationen ansteuert und den Multiplexer (M) zum Weiterschicken dieser Informationen über die den angesteuerten Speicherplätzen entsprechenden Zeichenkanäle veranlasst.

6. Fernsprechvermittlungsanlage nach Anspruch 5, dadurch gekennzeichnet, dass der Decoder (D) einen Ausgang hat, über den mit Hilfe einer zusätzlichen Steueradresse, die vom Adressenzähler (C) geliefert wird und in den Zyklus der sonstigen Adressen eingefügt ist, eine Steuerinformation zum FiFo-Speicher (F) geschickt wird, die die Weitergabe einer gespeicherten Information über seinen Ausgang und die Verschiebung der nächsten auszugebenden Informationen zum Ausgang hin bewirkt.

7. Fernmeldevermittlungsanlage nach einem der vorhergehenden Ansprüche, dadurch gekennzeichnet, dass der FiFo-Speicher (F) weniger Speicherplätze als der Pufferspeicher (B) hat.

8. Fernmeldevermittlungsanlage nach einem der vorhergehenden Ansprüche, dadurch gekennzeichnet, dass das Steuerwerk (GP1...) als dezentrales Steuerwerk ausgebildet ist, und dass die dezentralen Steuerwerke (GP1...) die Vermittlungsfunktionen für die mit ihnen verbundenen Teilnehmeranschlussschaltungen und Verbindungsschaltungen und für ihre Zeitkanalkoppler (TSU) abwickeln, dass ein zentrales Steuerwerk (CP) vorgesehen ist, das Vermittlungsfunktionen abwickelt, die den Zusammenhang der Zeitkanalkoppler (TSU) beim Aufbau von Verbindungswegen zu berücksichtigen haben.

9. Fernmeldevermittlungsanlage nach Anspruch 8, dadurch gekennzeichnet, dass ein dezentrales Steuerwerk (GP1) über Zeichenkanäle jeweils mit folgenden Einrichtungen verbunden ist: mit Mehrfachanschlussschaltungen (LTU1...LTl8), die jeweils mehrere Teilnehmeranschlussschaltungen (t1...t32...) und die zugehörigen Schaltungen haben oder mehrere Verbindungsleitungsanschlussschaltungen umfassen, mit einer Kopplersteuerung (SESC) für einen diesen Anschlussschaltungen zugeordneten Zeitkanalkoppler (TSU) und über diesen Zeitkanalkoppler (TSU) mit dem zentralen Steuerwerk (CP) und mit einer Signalschaltung (SEU), in der Tongenerator, Rufgenerator, Codesender und Empfänger zusammengefasst sind.

10. Fernmeldevermittlungsanlage nach Anspruch 8, dadurch gekennzeichnet, dass ein zentrales Steuerwerk (CP) über Zeichenkanäle mit den dezentralen Steuerwerken (GP1...) verbunden ist und dass diese Zeichenkanäle über jeweils einen vom betreffenden dezentralen Steuerwerk (GP1) gesteuerten Zeitkanalkoppler (TSU) geführt sind.

11. Fernmeldevermittlungsanlage nach einem der vorhergehenden Ansprüche, dadurch gekennzeichnet, dass die Informationen über die Zeichenkanäle zur Erhöhung der Übertragungssicherheit jeweils mehrfach wiederholt werden.

**Claims**

1. Indirectly controlled telecommunications exchange system equipped with time channel couplers (TSU), in particular a telephone exchange system, comprising a control unit (GP1) which transmits items of information, which are supplied by a working store (MU) and are destined to be emitted to a plurality of different switching devices (SEU, LTU1...LTU8, TSU, CP, SESC) and which between supply and emission are supplemented by addresses, via time slot signal channels corresponding to the switching devices (SEU, LZU1...LTU8, TSU, CP, SESC) at intervals of time to those determined inter alia by the time slots of the signal channels, characterised in that a master unit (SSP) which controls the operating flow of the control unit (GP1) calls up the items of information from the working store (MU) by actuating store positions of the working store (MU) by means of working store position addresses and forwards the items of information together with the working store position addresses to a FiFo store (F), that the items of information are received unaltered by the FiFo store (F), whereas the attached working store position addresses are firstly fed to a converter (U) by which they are converted into switching device addresses which are likewise stored in a FiFo store (F) in individual assignment to the corresponding items of information, which simultaneously indicate the store positions of a buffer store (B) and which serve to actuate store positions of this buffer store (B), that the buffer store (B), which is operated in regular cyclic fashion, successively withdraws from the FiFo store (F) the items of information with the switching device addresses which it stores, with the aid of the switching device addresses which are likewise acquired, in its buffer store positions, and that in accordance with the cyclic mode of operation of the buffer store (B) the items of information are cyclically emitted to the switching devices (SESC) for which they are destined on the basis of their switching device addresses, and that in accordance with the actuation of the buffer store positions by means of the switching device addresses the buffer store positions are individually assigned to the switching devices (SEU, LTU1...LTU8, TSU, CP, SESC).

2. Telecommunications exchange system as claimed in claim 1, characterised in that for the cyclic emission of the items of information from the buffer store (B) to the switching devices (SEU, LTU1...LTU8, TSU, CP, SESC), between these switching devices and the buffer store (B) there is arranged a multiplexer (M) which distributes the items of information between various time slot signal channels which lead to the switching devices (SEU, LTU1...LTU8, TSU, CP, SESC).

3. Telecommunications exchange system as claimed in claim 1, characterised in that the FiFo store (F) consists of a shift register which shifts the items of information byte-wise from the input which is connected to the converter (U) and the working store (MU) to the output via which the buffer store (B) is supplied with the items of information for writing in and with the buffer store position addresses for the actuation of buffer store positions.

4. Telecommunications exchange system as claimed in claim 2, characterised in that from the buffer store (B) the items of information are forwarded byte-wise in parallel fashion to the multiplexer (M) by which they are transmitted byte-wise in serial fashion via the time slot signal channels.

5. Telecommunications exchange system as claimed in one of the claims 2 to 4, characterised in that an address counter (C) is provided which is connected to the buffer store (B) via a decoder (D) and to the multiplexer (M), and which actuates the store positions for the read-out of items of information and causes the multiplexer (M) to forward these items of information via the signal channels which correspond to the actuated store positions.

6. Telephon exchange system as claimed in claim 5, characterised in that the decoder (D) possesses an output via which, with the aid of an additional control address which is supplied by the address counter (C) and is interposed into the cycle of the other addresses, the FiFo store (F) is supplied with an item of control information as a result of which it outputs an item of stored information via its output and shifts the next items of information which are to be emitted towards the output.

7. Telecommunications exchange system as claimed in one of the preceding claims, characterised in that the FiFo store (F) possesses fewer store positions than the buffer store (B).

8. Telecommunications exchange system as claimed in one of the preceding claims, characterised in that the control unit (GP1) is formed as a decentral control unit, and that the decentral control units (GP1...) carry out the switching functions for the subscriber terminal circuits and connection circuits connected thereto and for their time channel couplers (TSU), that a central control unit (CP) is provided which carries out switching functions which must take into account the interrelationship between the time channel couplers (TSU) during the establishment of connection paths.

9. Telecommunications exchange system as claimed in claim 8, characterised in that a decentral control unit (GP1) is connected via signal channels to the following devices: to multiple terminal circuits (LTU1...LTI8) which have respective pluralities of subscriber terminal circuits (T1...T32) and have associated circuits or comprise a plurality of connection line terminal circuits, to a coupler unit (SESC) for a time channel coupler (TSU) assigned to these terminal circuits, and via this time channel coupler (TSU) to the central control unit (CP) and to a signal circuit (SEU) in which audio signal generator, ringing tone generator, code transmitter and receiver are assembled.

10. Telecommunications exchange system as claimed in claim 8, characterised in that a central control unit (CP) is connected via signal channels to the decentral control units (GP1...) and that these signal channels each extend via a time channel coupler (TSU) which is controlled by the relevant decentral control unit (GP1).

11. Telecommunications exchange system as claimed in one of the preceding claims, characterised in that the items of information are repeated several times via the signal channels in order to increase the transmission reliability.

**Revendications**

1. Central de télécommunications, plus particulièrement central téléphonique, à commande indirecte et équipé de joncteurs à canaux à division temporelle (TSU), du type comportant un dispositif de commande (GP1) qui transmet des informations qui sont fournies par une mémoire de travail (MU) et qui sont destinées à être fournies à plusieurs dispositifs de commutation différents (SEU, LTU1...LTU8, TSU, CP, SESC) et qui sont complétées par des adresses depuis la fourniture jusqu'à l'émission, par l'intermédiaire des canaux de signaux de position temporelle qui correspondent aux dispositifs de commutation (SEU, LTU1...LTU8, TSU, CP, SESC), à ceux des intervalles de temps qui sont déterminés, entre autre par les positions temporelles des canaux de signaux, caractérisé par le fait qu'un dispositif de détournement (SSP) qui commande le déroulement du fonctionnement du dispositif de commande (GP1) prélève les informations de la mémoire de travail (MU) par attaque d'emplacements de mémoire de cette mémoire de travail (MU) à l'aide d'adresses d'emplacements de mémoire et transmet des informations avec les adresses d'emplacements de mémoire à une mémoire FiFo (F), que les informations sont prises en charge par la mémoire FiFo (F) sans modification, alors que les adresses associées des emplacements de la mémoire de travail sont d'abord appliquées à un convertisseur (U) qui les transforme en adresses des dispositifs de commutation qui sont, avec une coordination individuelle avec les informations correspondantes, également mémorisées dans la mémoire FiFo (F), qui indiquent en même temps les emplacements de mémoires d'une mémoire tampon (B) et qui servent à attaquer des emplacements de mémoires de cette mémoire tampon (B), que la mémoire tampon (B), qui opère régulièrement et cycliquement, prélève successivement de la mémoire FiFo (F) les informations à l'aide de l'adresse des dispositifs de commutation et les mémorise en ses emplacements de la mémoire tampon, à l'aide des adresses des dispositifs de commutation ainsi obtenues, et que les informations sont fournies, en fonction du mode de fonctionnement cyclique de la mémoire tampon (B), aux dispositifs de commutation pour lesquels elles sont destinées en raison de leurs adresses des dispositifs de commutation, et qu'en fonction de l'attaque des emplacements de la mémoire tampon et à l'aide des adresses des dispositifs de commutation, les emplacements de la mémoire tampon sont associés individuellement aux dispositifs de commutation (SEU, LTU1...LTU8, TSU, CP, SESC).

2. Central de télécommunications selon la revendication 1, caractérisé par le fait que pour la fourniture cyclique des informations de la mémoire tampon (B) aux dispositifs de commutation (SEU, LTU1...LTU8, TSU, CP, SESC), un multiplexeur (M) est monté entre les dispositifs de commutation et la mémoire tampon, lequel multiplexeur répartit les informations sur les différents canaux de signaux de position temporelle qui mènent aux dispositifs de commutation (SEU, LTU1...LTU8, TSU, CP, SESC).

3. Central de télécommunications selon la revendication 1, caractérisé par le fait que la mémoire FiFo (F) est réalisée sous la forme d'un registre à décalage qui déplace les informations bit par bit de l'entrée, à laquelle sont reliés le convertisseur (U) et la mémoire de travail (MU), vers la sortie par l'intermédiaire de laquelle sont transmises à la mémoire tampon les informations pour la mémorisation et les adresses d'emplacements de la mémoire tampon pour la commande des emplacements de la mémoire tampon.

4. Central de télécommunications selon la revendication 2, caractérisé par le fait qu'à partir de la mémoire tampon (B) les informations sont transmises bit par bit et par voie parallèle au multiplexeur (M) qui les transmet bit par bit et de façon sérielle par l'intermédiaire des canaux de signaux de position temporelle.

5. Central de télécommunications selon l'une des revendications 2 à 4, caractérisé par le fait qu'il est prévu un compteur d'adresses (C) qui est relié à la mémoire tampon (B) par l'intermédiaire d'un décodeur (D) et au multiplexeur (M), et qui attaque les emplacements de mémoire pour la lecture d'informations et le multiplexeur (M) pour l'envoi de ces informations par l'intermédiaire des canaux de signaux qui correspondent aux emplacements de mémoires qui ont été attaqués.

6. Central de télécommunications selon la revendication 5, caractérisé par le fait que le décodeur (D) possède une sortie par l'intermédiaire de laquelle, et à l'aide d'une adresse de commande supplémentaire qui est fournie par le compteur d'adresses (C) et qui est insérée dans le cycle des adresses habituelles, une information de commande est envoyée à la mémoire FiFo (F) qui provoque la transmission d'une information mémorisée, par l'intermédiaire de sa sortie et le décalage de l'information suivante à indiquer, vers la sortie.

7. Central de télécommunications selon l'une des revendications antérieures, caractérisé par le fait que la mémoire FiFo (F) possède moins d'emplacements de mémorisation que la mémoire tampon (B).

8. Central de télécommunications selon l'une des revendications précédentes, caractérisé par le fait que le dispositif de commande (GP1...) est réalisé sous la forme d'un dispositif de commande décentralisé et que les dispositifs de commande décentralisés (GP1...) déroulent les opérations de commutation pour les lignes d'abonnés et pour les circuits de liaisons qui leur sont reliés de même que pour leurs coupleurs de canaux temporels, qu'il est prévu un dispositif de commande central qui déroule des fonctions de commutation qui doivent tenir compte de la relation des coupleurs de canaux temporels (TSU) lors de l'établissement de voies de liaisons.

9. Central de télécommunications selon la revendication 8, caractérisé par le fait qu'un dispositif de commande décentralisé (GP1) est relié, par l'intermédiaire des canaux de signaux, respectivement avec les dispositifs suivants: avec des circuits d'abonné à lignes groupées (LTU1...LTI8) dont chacun comprend plusieurs lignes de rattachement (t1...t32...) et les circuits associés ou plusieurs circuits de branchement de joncteurs, avec une commande de coupleurs (SESC) pour un coupleur de canaux temporels (TSU) associé à ces circuits de branchement, et, par l'intermédiaire de ce coupleur de canaux temporels (TSU), avec le dispositif de commande central (CP) et avec un circuit de signalisation (SEU) dans lequel sont rassemblés le générateur de son, le générateur d'appel, l'émetteur de code et le récepteur.

10. Central de télécommunications selon la revendication 8, caractérisé par le fait qu'un dispositif de commande central (CP) est relié par l'intermédiaire de canaux de signaux avec les dispositifs de commande décentralisés (GP1...) et que ces canaux de signaux passent respectivement par un coupleur de canaux de signaux (TSU) qui est commandé par le dispositif de commande décentralisé concerné (GP1).

11. Central de télécommunications selon l'une des revendications précédentes, caractérisé par le fait que les informations sont respectivement répétées à plusieurs reprises par l'intermédiaire des canaux de signaux, en vue d'augmenter la sécurité de la transmission.

FIG 1

# FIG 2